(19) Europäisches Patentamt / European Patent Office / Office européen des brevets

(11) **EP 3 909 670 B1**

(12) **EUROPEAN PATENT SPECIFICATION**

(45) Date of publication and mention
of the grant of the patent:
**20.03.2024 Bulletin 2024/12**

(21) Application number: **20738724.2**

(22) Date of filing: **07.01.2020**

(51) International Patent Classification (IPC):
**B01D 71/02** (2006.01)    **C12C 7/16** (2006.01)
**C12H 1/048** (2006.01)    **C12H 1/075** (2006.01)

(52) Cooperative Patent Classification (CPC):
**B01D 63/066; B01D 65/02; C12C 7/165;**
B01D 61/14; B01D 71/02; B01D 2311/04;
B01D 2311/2688; B01D 2315/10

(86) International application number:
**PCT/JP2020/000138**

(87) International publication number:
**WO 2020/145258 (16.07.2020 Gazette 2020/29)**

(54) **PRODUCTION METHOD FOR FERMENTED MALT BEVERAGE AND FILTRATION METHOD FOR FERMENTED LIQUID**

HERSTELLUNGSVERFAHREN FÜR FERMENTIERTES MALZGETRÄNK UND FILTRATIONSVERFAHREN FÜR FERMENTIERTE FLÜSSIGKEIT

PROCÉDÉ DE PRODUCTION POUR BOISSON MALTÉE FERMENTÉE ET PROCÉDÉ DE FILTRATION POUR LIQUIDE FERMENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2019 JP 2019003781**

(43) Date of publication of application:
**17.11.2021 Bulletin 2021/46**

(73) Proprietors:
• NGK Filtech, Ltd.
Chigasaki-shi
Kanagawa 253-0071 (JP)
• NGK Insulators, Ltd.
Nagoya-shi, Aichi 467-8530 (JP)

(72) Inventors:
• WATANABE, Kohei
Moriya-shi, Ibaraki 302-0106 (JP)
• FUJIWARA, Takeyuki
Moriya-shi, Ibaraki 302-0106 (JP)
• KOSAKA, Shinichi
Chigasaki-shi, Kanagawa 253-0071 (JP)
• HIEDA, Koji
Nagoya-shi, Aichi 467-8530 (JP)

(74) Representative: **Müller-Boré & Partner**
**Patentanwälte PartG mbB**
**Friedenheimer Brücke 21**
**80639 München (DE)**

(56) References cited:
EP-A1- 0 351 363    EP-A1- 2 832 426
WO-A1-2012/011808    WO-A1-2013/147271
JP-A- S6 041 476    JP-A- H01 501 534
JP-A- H02 150 263    US-A1- 2005 279 693

• Miyachi, Hideo: "Passage; Beer Fermentation Techniques" In: "Beer Fermentation Techniques", 28 December 1999 (1999-12-28), Shokuhin Sangyo Shinbunsha, JP, XP009528415, pages 336-337, 371-377,
• Koici Matsuszawa: "Development of a new high Performance silica gel for improvement of foam and colloidal stability of beer", Journal of the brewing society of japan, vol. 85, no. 10, 1 January 1990 (1990-01-01), pages 708-718, XP055724688, ISSN: 0914-7314, DOI: 10.6013/jbrewsocjapan1988.85.708

**Description**

TECHNICAL FIELD

The present invention relates to a method of producing a fermented malt beverage and a method of filtering a fermented liquid.

BACKGROUND ART

Fermented malt beverages such as beer and happoushu that use malt as a raw material are produced by adding yeast to a raw material liquid, fermenting the mixture, and then removing the yeast in a filtration step. In this filtration step, silica gel, polyvinylpolypyrrolidone (PVPP) or the like is generally used as a stabilizer in order to adsorb and remove causative substances of turbidity. As a filtration method, diatomaceous earth filtration has been conventionally used. However, in recent years, cross-flow filtration, which can suppress loss when switching varieties, generation of waste, etc. and is easy to handle, has come to be used. In the cross-flow filtration of fermented malt beverages, a polymer membrane filter is usually used. Document EP0351363 discloses a method for producing a fermented malt beverage wherein the filtration and stabilization is done by cross-flow membrane filtration in the presence of stabilizers.

For example, Japanese Patent Laid-open Publication No. S62(1987)-3287 describes that a ceramic membrane filter is used for filtering beer. However, in reality, the filter has not been put into practical use because a sufficient permeation flux cannot be obtained.

SUMMARY OF INVENTION

TECHNICAL PROBLEMS

When the cross-flow filtration is applied to the production of fermented malt beverages such as beer, the time to continue the cross-flow filtration depends on a transmembrane pressure (TMP). If the transmembrane pressure becomes too high, load on a pump increases, so that filtration cannot be continued. Thus, in order to secure a practical filtration time, it is necessary to suppress the increase in the transmembrane pressure.

Therefore, an object of the present invention is to provide a method of producing a fermented malt beverage, which includes a cross-flow filtration step using a ceramic membrane filter, suppresses a rapid increase in transmembrane pressure, and enables a long-term filtration operation.

SOLUTIONS TO PROBLEMS

Specific means for solving the above-described object are as follows, and the present invention includes the following aspects.

The first aspect is a method of producing a fermented malt beverage, which comprises cross-flow filtering a fermented liquid containing malt as a raw material. In this production method, the cross-flow filtration is performed through a monolithic ceramic membrane filter disposed apart from a flow path of the fermented liquid, including a slit having an opening in its side surface, and having a membrane pore size of 0.6 $\mu$m or more and 0.9 $\mu$m or less, and the fermented liquid contains silica gel having a drying loss of 40% or more.

In one aspect, in the cross-flow filtration, a permeation flux may be 30 L/m$^2$/h or more. In one aspect, the cross-flow filtration may be performed with a transmembrane pressure of 0.6 MPa or less. In one aspect, the cross-flow filtration may include increasing the transmembrane pressure to 0.3 MPa or more. In one aspect, the cross-flow filtration may be performed continuously for 3 hours or more using the same monolithic ceramic membrane filter. In one aspect, in the cross-flow filtration, a log reduction value LRV may be 5 or more relative to Lactobacillus brevis. In one aspect, the production method may not comprise at least one of a disinfection treatment and a sterilization treatment of the fermented liquid other than the cross-flow filtration. In one aspect, the production method may not comprise filtration of the fermented liquid other than the cross-flow filtration. In one aspect, the production method may not comprise a heat sterilization step of the fermented liquid. In one aspect, in the production method, the log reduction value LRV may be 5 or more relative to Lactobacillus brevis. In one embodiment, the cross-flow filtration may be performed through two or more monolithic ceramic membrane filters connected in parallel via a flow path. In one embodiment, the cross-flow filtration may be performed at a temperature of the fermented liquid of -2°C or higher and 3°C or lower.

The second aspect is a method of filtering a fermented liquid, which includes cross-flow filtering the fermented liquid containing malt as a raw material. In this filtration method, the cross-flow filtration is performed through a monolithic ceramic membrane filter disposed apart from a flow path of the fermented liquid, including a slit having an opening in its side surface, and having a membrane pore size of 0.6 $\mu$m or more and 0.9 $\mu$m or less, and the fermented liquid contains silica gel having a drying loss of 40% or more.

In one aspect, the cross-flow filtration is continuously performed by sequentially switching two or more monolithic ceramic membrane filters switchably connected to the flow path of the fermented liquid, and includes allowing the fermented liquid to permeate through at least one of the monolithic ceramic membrane filters and performing clean-in-place cleaning of at least one other of the monolithic ceramic membrane filters, and switching the flow path of the fermented liquid to allow the fermented liquid to permeate through the monolithic ceramic membrane filter after the clean-in-place cleaning and performing clean-in-place cleaning of the monolithic ceramic membrane filter through which the fermented liquid has permeated, and a time during which the fermented liquid is permeated may be longer than a time required for the clean-in-place cleaning.

ADVANTAGEOUS EFFECTS OF INVENTION

According to the present invention, it is possible to provide a method of producing a fermented malt beverage, which includes a cross-flow filtration step using a ceramic membrane filter, suppresses a rapid increase in transmembrane pressure, and enables a long-term filtration operation.

BRIEF DESCRIPTION OF DRAWINGS

FIG. 1 is a schematic view showing a configuration of a general monolithic ceramic membrane filter.
FIG. 2 is a schematic view showing a structure of the monolithic ceramic membrane filter provided with a slit.
FIG. 3 is a schematic view showing an example of a configuration of a cross-flow filtration apparatus.
FIG. 4 is a schematic view showing another example of the configuration of the cross-flow filtration apparatus.
FIG. 5 is a schematic view for explaining a filtration method using a plurality of filters.
FIG. 6 is a schematic view for explaining the filtration method using the plurality of filters.
FIG. 7 is a schematic view showing a structure of the monolithic ceramic membrane filter provided with the slit, which has been used in Examples.
FIG. 8 is a graph showing a relationship between a transmembrane pressure and a filtration time in Examples and Comparative Examples.
FIG. 9 is a graph showing a relationship between the transmembrane pressure and the filtration time in Comparative Example and Reference Examples.
FIG. 10 is a graph showing a relationship between the transmembrane pressure and the filtration time in Comparative Examples and Reference Examples.

DESCRIPTION OF EMBODIMENT

In the present specification, in addition to an independent step, the term "step" also refers to a step that achieves an intended object of the step even when the step cannot be clearly distinguished from other steps. Numeric ranges indicated by "to" are ranges that include the minimum and maximum values each stated before and after the "to." In addition, in a case where a plurality of substances corresponding to each of the components in the composition are present, the content of each component in the composition, unless otherwise noted, is taken to mean the total amount of these substances present in the composition. Hereinafter, an embodiment of the present invention will be described in detail. However, the following embodiment exemplifies a method of producing a fermented malt beverage for embodying the technical idea of the present invention, and the present invention is not limited to the method of producing a fermented malt beverage, and the like shown below.

Method of producing fermented malt beverage

The method of producing a fermented malt beverage comprises a filtration step of cross-flow filtering a fermented liquid containing malt as a raw material. The cross-flow filtration is performed through a monolithic ceramic membrane filter having a membrane pore size of 0.6 $\mu$m or more and 0.9 $\mu$m or less. The monolithic ceramic membrane filter is disposed apart from a flow path of the fermented liquid and includes a slit having an opening in its side surface. The fermented liquid used for cross-flow filtration contains silica gel having a drying loss of 40% or more. The production steps other than the filtration step, for example, a mashing step, a fermentation step, a packaging step, and the like are not particularly limited.

The fermented liquid containing specific silica gel is permeated using a monolithic ceramic membrane filter having a pore size of the membrane within a specific range and including a slit through which a filtrate is removed, so that a rapid increase in transmembrane pressure is suppressed to enable a long-term filtration operation. Since yeast and microorganisms other than yeast are efficiently removed from the fermented liquid, it is not necessary to subject a filtrate to disinfection treatment, sterilization treatment, etc. like an additional filtration step, and the production step is simplified.

The fermented malt beverage to be produced is a beverage produced, including a step of fermenting a raw material containing malt, and examples thereof include beers, happoushu, effervescent alcoholic beverages called a new genre, and refreshing drinks from which alcohol is removed from these beverages.

Here, the beer may be beer defined by the Japanese Liquor Tax Act (Act No. 59 of 2018), the Japanese Liquor Tax Act Enforcement Order (Cabinet Order No. 136 of 2018), and the Ordinance for Enforcement of the Japanese Liquor Tax Act (Ordinance of the Ministry of Finance No. 19 of 2018), is not limited to these beers, and includes beer as a general concept.

The beer in the above laws refers to the following alcoholic beverages with an alcohol content of less than 20%.

A) Alcoholic beverages fermented using malt, hops and water as raw materials.

B) Alcoholic beverages fermented using malt, hops, water, wheat and other products specified by government ordinance as raw materials (the alcoholic beverages are limited to those that have a malt weight of 50% or more of a total weight of raw materials other than hops and water, and in which a total weight of products specified by government ordinance in the raw materials does not exceed 5% of the weight of malt).

C) Alcoholic beverages fermented by adding hops or products specified by government ordinance to the alcoholic beverages listed in A and B (the alcoholic beverages are limited to those that have a weight of 50% or more of a total weight of raw materials other than hops and water, and in which a total weight of products specified by government ordinance in the raw materials does not exceed 5% of the weight of malt).

Happoushu includes alcoholic beverages, using malt or wheat as part of raw materials, other than beer and beer-like effervescent beverages, and the new genre is a product obtained by adding spirits to happoushu.

The fermented liquid is a liquid obtained by alcohol-fermenting a raw material liquid containing sugar with yeast. The fermented liquid contains yeast, protein, polyphenols, etc., and may unintentionally contain microorganisms other than yeast. Lactic acid bacteria and the like can be considered as microorganisms that can be contained in addition to yeast. At least malt is used as a raw material for preparation of the raw material liquid When a plant-derived protein such as soybean protein is used as a raw material, filterability may deteriorate if a use ratio of dark-colored malt roasted at 100°C or higher is high. The fermented liquid may be prepared by fermenting a raw material liquid having a desired configuration with yeast by a commonly used method.

Silica gel having a drying loss of 40% or more is added to the fermented liquid obtained by fermenting the raw material liquid by a conventional method. The fermented liquid is then subjected to the filtration step, and at least a portion of at least one substance selected from the group consisting of yeast, other microorganisms other than yeast, proteins, polyphenols and the like is removed by cross-flow filtration using the monolithic ceramic membrane filter including a slit.

The fermented liquid subjected to the filtration step contains silica gel having a drying loss of 40% or more, preferably a drying loss of 50% or more. Silica gel is contained as a stabilizer, for example, in the fermented liquid. From the fermented liquid containing silica gel, proteins and the like that cause turbidity are adsorbed/removed from the fermented liquid by the filtration step. Since the fermented liquid contains silica gel having a drying loss of 40% or more and a high water content, the rapid increase in transmembrane pressure is suppressed in the filtration step.

The drying loss of silica gel is a value measured in accordance with ISO 787-2: 1981 (JIS K 5101-15-1: 2004) and expressed as a mass fraction (%) by the following formula when the silica gel is dried at 105°C for 2 hours.

[MATH. 1]

$$\frac{100 \times (m^0 - m^1)}{m^0}$$

Here, $m^0$: mass of sample (g), and $m^1$: mass of sample after drying (g).

Commercially available silica gel may be used. Examples of silica gel having a drying loss of 40% or more include BRITESORB (registered trademark) manufactured by PQ Corporation and DARACLAR (registered trademark) manufactured by Grace WR & Co. As the silica gel, for example, it is possible to use silica gel having a volume-based 50% particle diameter (median diameter; d50) of 15 $\mu$m or more and 45 $\mu$m or less and a drying loss of 40% or more and 70% or less.

It is preferable that in the silica gel used, a number-based 10% particle diameter (d10) is larger than the pore size of the ceramic membrane filter. As a result, clogging of the membrane filter is more effectively suppressed, and the rapid increase in transmembrane pressure is further suppressed in the filtration step. The number-based 10% particle diameter (d10) of silica gel is, for example, 1.0 $\mu$m or more, preferably 2.0 $\mu$m or more, and, for example, 5.0 $\mu$m or less.

The number-based 50% particle diameter of silica gel is, for example, 3.0 $\mu$m or more, preferably 5.0 $\mu$m or more, and, for example, 15.0 $\mu$m or less, preferably 10.0 $\mu$m or less. The volume-based 50% particle diameter of silica gel is, for example, 4.0 $\mu$m or more, preferably 15.0 $\mu$m or more, and, for example, 45.0 $\mu$m or less, preferably 35.0 $\mu$m or less. When the number-based or volume-based 50% particle diameter is in the above range, the rapid increase in transmembrane pressure is further suppressed in the filtration step.

Any percent particle diameter of silica gel may be measured using a commercially available particle diameter distribution measuring device, particle counter, or the like in accordance with ISO 13320: 2009 (JIS Z 8825: 2013).

A specific surface area of silica gel is, for example, 300 m$^2$/g or more, preferably 500 m$^2$/g or more, and for example 1000 m$^2$/g or less, preferably 850 m$^2$/g or less. When the specific surface area of silica gel is in the above range, proteins are sufficiently removed in the filtration step.

A content of silica gel is, for example, preferably 100 ppm or more, more preferably 200 ppm or more, still more preferably 300 ppm or more, based on the fermented liquid. The silica gel content is, for example, preferably 2000 ppm or less, more preferably 1200 ppm or less, and still more preferably 1000 ppm or less. Here, the silica gel content of 1 ppm corresponds to 1 mg/L. When the silica gel content is equal to or more than the above lower limit value, proteins that cause turbidity can be sufficiently adsorbed/removed. When the silica gel content is equal to or less than the above upper limit value, the deterioration of the filterability is suppressed, and foam retention of the fermented malt beverage is well maintained.

In the present embodiment, silica hydrogel having a relatively large drying loss (moisture content) of 40% or more is used as silica gel. In addition to this, silica gel includes silica xerogel having a relatively small drying loss (moisture content). In Japan, it is common to use easily available silica xerogel having a drying loss of 10% or less in the method of producing a fermented malt beverage. As the silica xerogel, for example, SYLOPUTE (registered trademark) manufactured by Fuji Silysia Chemical Ltd., CARPLEX (registered trademark) manufactured by Evonik Industries Ag, etc. are commercially available.

However, in the cross-flow filtration using a ceramic membrane filter, when silica xerogel as a stabilizer and a main component is added to the fermented liquid, the increase in transmembrane pressure (TMP) becomes extremely fast, which may make long-term filtration operation difficult. On the other hand, when silica hydrogel having a drying loss of 40% or more is added as a main component, such a rapid increase in transmembrane pressure is sufficiently suppressed. The transmembrane pressure is expressed by the following formula, and when a plurality of ceramic membrane filters are used, the transmembrane pressure as the entire filtration apparatus is taken into consideration.

[MATH. 2]

$$\text{Transmembrane pressure (TMP)} = \frac{\text{Membrane filter inlet pressure} - \text{Membrane filter outlet pressure}}{2} - \text{Permeation side pressure}$$

The fermented liquid may contain silica xerogel as long as the effects of the present invention are not impaired. When the fermented liquid contains silica xerogel, the content thereof is, for example, 500 ppm or less, preferably 300 ppm or less, more preferably 150 ppm or less, and still more preferably less than 1 ppm. That is, it is preferable that the fermented liquid does not substantially contain silica xerogel.

The fermented liquid may contain polyvinylpolypyrrolidone (PVPP) as a stabilizer for adsorbing/removing turbidity-causing substances. As PVPP, Divergan (registered trademark) manufactured by BASF, Polyclar (registered trademark) manufactured by Ashland, etc. are commercially available. When the fermented liquid contains PVPP, the content thereof is, for example, 300 ppm or less, preferably 200 ppm or less, more preferably 150 ppm or less, and still more preferably less than 1 ppm. That is, it is preferable that the fermented liquid does not substantially contain polyvinylpolypyrrolidone.

In the present embodiment, by using silica hydrogel as a stabilizer, for example, even when the transmembrane pressure rises to 0.3 MPa or more, cleaning recoverability of the ceramic membrane filter is well maintained, and the permeation flux can be sufficiently and easily restored by cleaning with a cleaning agent. Although the ceramic membrane filter itself has a pressure resistance of 1 MPa or more, considering load on a pump, a supply pressure of pneumatic instrumentation, equipment maintenance, etc., the transmembrane pressure during the filtration step is, for example, less than 1 MPa, preferably 0.6 MPa or less, and more preferably 0.5 MPa or less.

Since silica hydrogel has lower adsorptivity to polyphenols than that of PVPP, it is considered that influence on a flavor of fermented malt beverage is less than that when PVPP is used.

In the method of producing a fermented malt beverage, a monolithic ceramic membrane filter provided with a slit (hereinafter, also simply referred to as "ceramic membrane filter") is used. In general, the ceramic membrane filter is superior in heat resistance, corrosion resistance, and durability to a polymer membrane filter. Since it is possible to perform chemical cleaning, back pressure cleaning, and regeneration by baking, the labor and cost of replacing the membrane filter can be reduced. Since the ceramic membrane filter has high strength, cross-flow filtration at a high filtration pressure or circulation flow velocity is possible, and, in addition, the ceramic membrane filter has such a characteristic that a pore size distribution is sharp and separation accuracy is high.

The monolithic ceramic membrane filter has a cylindrical shape or a prismatic shape, and is provided with a stock solution channel penetrating between two end surfaces (for example, bottom surface and top surface) orthogonal to a stretching direction. A stock solution to be filtered is filtered by a membrane layer provided surrounding the stock solution channel while flowing through the stock solution channel and passes through a substrate material layer, and a filtered solution flows out to a permeation side. A cross-sectional shape of the stock solution channel may be any of a circular shape, an elliptical diameter, an oval shape, a polygonal shape, and the like.

The ceramic membrane filter is configured by, for example, providing a membrane layer having a desired pore size (average pore diameter) on a porous substrate material layer. An intermediate layer may be provided between the substrate material layer and the membrane layer, if necessary. By providing the underlying intermediate layer, it is possible to suppress outflow of ceramic particles constituting the membrane layer, for example, even when the pore size of the membrane layer is as fine as 0.5 $\mu$m or less.

The ceramic membrane filter used in the present embodiment is provided with a slit (hereinafter, also referred to as a liquid collecting slit). The slit is provided in the substrate material layer so as not to intersect the stock solution channel and has an opening on a surface of the ceramic membrane filter. The opening of the slit may be provided on a side surface of the ceramic membrane filter, for example, and the slit may be provided so as to penetrate between the side surfaces. A cross-sectional shape of the slit may be, for example, a rectangular shape, and may be a substantially circular shape, an elliptical diameter, an oval shape, a polygonal shape, or the like. The slit may be provided, for example, in the substrate material layer so as to be substantially parallel to the stock solution channel and may be connected to at least one liquid collection channel having no opening on its end surface. A cross-sectional shape of the liquid collection channel may be any of a circular shape, an elliptical diameter, an oval shape, a polygonal shape, and the like. By providing the slit, a maximum value of a distance from the stock solution channel to a surface on the permeation side can be reduced, and a surface area on the permeation side can be increased, so that the permeation flux can be improved.

For the ceramic membrane filter having the slit, see, for example, US Pat. No. 4,781,831, WO 2013/147271 and the like.

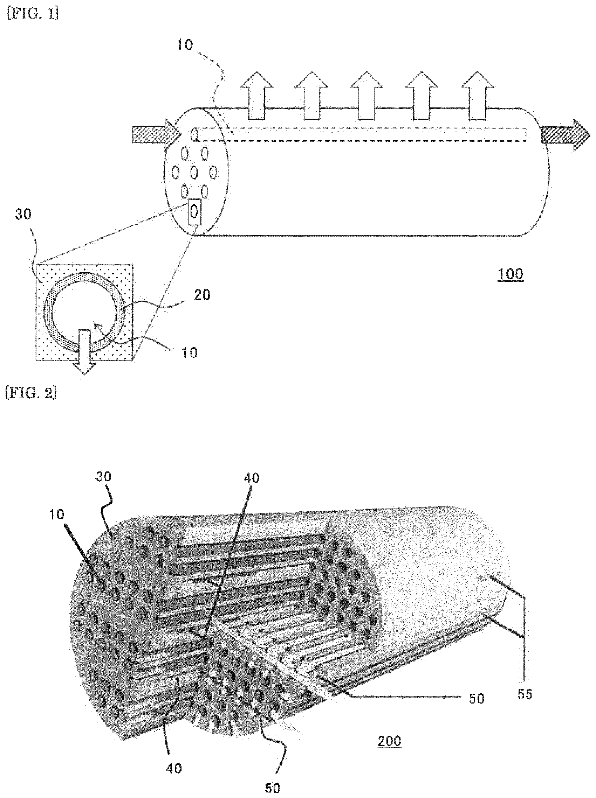

FIG. 1 is a schematic view showing a configuration of a general monolithic ceramic membrane filter 100. A stock solution to be filtered enters an inside of each stock solution channel 10 which is a flow path, and is filtered by seeping out from the inside of the stock solution channel 10 through a membrane layer 20 and a substrate material layer 30. In the general monolithic ceramic membrane filter 100 shown in FIG. 1, no slit is provided in the substrate material layer 30.

FIG. 2 is a schematic view showing an example of a configuration of a monolithic ceramic membrane filter 200 having a slit according to the present embodiment. FIG. 2 is a partially reorganized drawing taken from the website of METAWATER Co., Ltd. (http://www.metawater.co.jp/news/2016/11/20161125-1.html). In the monolithic ceramic membrane filter 200, a plurality of the stock solution channels 10 are provided as through holes penetrating in a length direction of the monolithic ceramic membrane filter 200 and having a substantially circular cross section. The plurality of the stock solution channels 10 are arranged substantially parallel to each other in a direction substantially orthogonal to the length direction. In the monolithic ceramic membrane filter 200, in the substrate material layer 30, a liquid collection channel 40 for collecting a filtrate is formed as a columnar hole having a substantially circular cross section without having an opening on its end surface. A plurality of the liquid collection channels 40 are provided so as not to intersect the stock solution channel 10 and substantially parallel to the stock solution channel 10. That is, the liquid collection channel 40 is provided apart from the stock solution channel 10 by the substrate material layer 30. A liquid collecting slit 50 is connected to the plurality of liquid collection channels 40 arranged substantially parallel to a stretching direction of the liquid collecting slit 50, and is provided with an opening 55 on a side surface of the monolithic ceramic membrane filter 200. In FIG. 2, the liquid collecting slit 50 is disposed so as to penetrate the substrate material layer 30 from one side surface side to the other side surface side of the monolithic ceramic membrane filter 200. In FIG. 2, the six liquid collecting slits 50 are arranged; however, the number of liquid collecting slits arranged may be, for example, 2 to 8.

The monolithic ceramic membrane filter 200 has, in the substrate material layer 30, the liquid collecting slit 50 connected to the liquid collection channel 40 and having the opening 55 on the side surface. As a result, a maximum value of a distance from the surface of the membrane layer 20 to the surface on the permeation side is reduced, the surface area on the permeation side increases, and a high permeation flux can be achieved.

The permeation flux of the monolithic ceramic membrane filter in the filtration step is, for example, 30 $L/m^2/h$ or more, preferably 40 $L/m^2/h$ or more, more preferably 50 $L/m^2/h$ or more, and still more preferably more than 50 $L/m^2/h$. When the permeation flux is equal to or more than the above lower limit value, it is possible to reduce a membrane area of the monolithic ceramic membrane filter and the number of monolithic ceramic membrane filters used with respect to a target permeation flow rate (L/h).

On the other hand, the permeation flux is, for example, 100 $L/m^2/h$ or less, preferably 80 $L/m^2/h$ or less, and more preferably 70 $L/m^2/h$ or less. When the permeation flux is equal to or less than the upper limit value, a rate of increase in transmembrane pressure is further suppressed, and the load on the pump installed on a primary side of the ceramic membrane filter due to the increase in transmembrane pressure is further reduced. As a result, time until an upper limit of a pump discharge pressure is reached is further extended, and a time during which continuous filtration can be performed using the same ceramic membrane filter is longer.

The pore size of the ceramic membrane filter is, for example, 0.6 $\mu$m or more and 0.9 $\mu$m or less, and preferably 0.6 $\mu$m or more and 0.8 $\mu$m or less. When the pore size of the ceramic membrane filter is 0.6 $\mu$m or more, the rate of increase in transmembrane pressure can be effectively suppressed, and continuous operation of the filtration step for a long time becomes possible. When the pore size of the ceramic membrane filter is equal to or less than the above upper limit value, sterilization performance of the ceramic membrane filter is sufficiently maintained, and it is not necessary to carry out disinfection treatment, sterilization treatment, etc. of the fermented liquid other than cross-flow filtration. The sterilization performance of the ceramic membrane filter will be described later.

The pore size of the ceramic membrane filter may be measured using a commercially available porosimeter of mercury intrusion type, for example, in accordance with JIS R 1655: 2003 "Test methods for pore size distribution of fine ceramic green body by mercury porosimetry". In the present specification, a peak value corresponding to the membrane layer read from a frequency distribution curve for a pore size that is obtained from test results by a test method specified in JIS R 1655: 2003 is defined as the pore size.

When a fermented liquid containing malt as a raw material is cross-flow filtered using the ceramic membrane filter, if the fermented liquid contains silica xerogel having a small drying loss (moisture content) as the main component of the stabilizer, the rate of increase in transmembrane pressure may increase. In particular, when the silica xerogel contains almost no particles having a particle diameter smaller than the pore size of the ceramic membrane filter, the rate of increase in transmembrane pressure may increase, for example even when the number-based 10% particle diameter (d10) is larger than the pore size.

The sterilization performance of the ceramic membrane filter may be evaluated by a log reduction value (LRV) obtained by a bacterial challenge test. The log reduction value of the ceramic membrane filter is, for example, 5 or more, preferably 6 or more, more preferably 7 or more, and still more preferably 9 or more. When the log reduction value of the filtration step using the ceramic membrane filter is 5 or more, the log reduction value as the entire production step can be easily set to 5 or more. As a result, in the production method in the present embodiment, it is less necessary to carry out sterilization treatment, disinfection treatment, etc. of the fermented liquid in addition to the cross-flow filtration. The added sterilization treatment, disinfection treatment, etc. of the fermented liquid are generally carried out by, for example, an additional filtration treatment, heat sterilization treatment, etc.

In general, when a fermented malt beverage is produced without a heat sterilization step such as Rasterization, it is desirable to secure a log reduction value (LRV) of 5 or more in the entire production step due to food hygiene reasons and need to capture microorganisms that affect quality. However, with conventional diatomaceous earth filtration and cross-flow filtration using a polymer membrane filter, it is difficult to achieve a log reduction value of 5 or more by a single step, and it has been necessary to provide disinfection treatment, sterilization treatment, and the like, as an additional filtration step to these cross-flow filtration steps. However, by using a ceramic membrane filter having a specific pore size, it is easily achieved that the log reduction value is 5 or more.

In the present specification, the bacterial challenge test is evaluated by the sterilization performance to microorganism which is mixed into a fermented malt beverage such as beer to cause turbidity, for example, Lactobacillus brevis, a lactic acid bacterium belonging to genus Lactobacillus, and is a typical beer-spoilage microorganism.

Specifically, the bacterial challenge test may be carried out by the following method. A test bacterium (Lactobacillus brevis NBRC 107147) is inoculated on MRS agar medium (Lactobacilli MRS Agar (Difco)), cultured at 30°C for 3 days, and the obtained microbial cell body is inoculated on MRS liquid medium (Lactobacilli MRS Broth (Difco)) and cultured at 30°C for 2 days. After centrifuging this culturing solution, the obtained microbial cell body is suspended in sterilized purified water so that the number of bacteria per 1 mL is about $10^{10}$ to obtain a bacterial solution. The bacterial solution is added to and mixed with 40 L of pure water so that the number of bacteria per 1 mL is about $10^7$, to prepare a test solution. A 1000 mL of the test solution is made to pass through a sample under conditions of 0.10, 0.15 and 0.20 MPa, to collect the passing water. The number of live bacterial cells (the number of test bacteria) of the test solution before passing through the sample is calculated by converting the number of live bacterial cells per 1 mL, measured by a flat plate smear culture method using MRS agar medium, into the number per 1000 mL. The number of live bacterial cells (the number of leaked bacteria) of the passing water is measured by a membrane filter method (30°C, culture for 3 days).

From the above test results, LRV is calculated by the following formula.

$$LRV = \log_{10}(A/B)$$

Here, A: the number of test bacteria and B: the number of leaked bacteria. If the number of leaked bacteria is 0, 1 is used for B, and the evaluation is made as LRV $\geq \log_{10}A$.

The material of the monolithic ceramic membrane filter used in the cross-flow filtration step is not particularly limited, and it is common to use high-purity alumina ($Al_2O_3$) for the substrate material layer, the intermediate layer, and the membrane layer.

The membrane area of the ceramic membrane filter, the surface area on the permeation side, the maximum value of the distance from the membrane surface to the surface on the permeation side, and the like may be selected according to a target filtration flow rate (L/h) and the like. For example, when a monolithic membrane filter having a diameter of 60 mm and a length of about 1100 mm is used, specifically, the membrane area of the ceramic membrane filter is, for example, 0.8 $m^2$ or more and 4.0 $m^2$ or less, and preferably 1.5 $m^2$ or more and 3.0 $m^2$ or less The surface area on the permeation side is, for example, 0.22 $m^2$ or more and 0.70 $m^2$ or less, and preferably 0.40 $m^2$ or more and 0.55 $m^2$ or less. A ratio of the maximum value of the distance from the membrane surface to the surface on the permeation side to an outer diameter of the monolithic ceramic membrane filter is, for example, 0.06 or more and 0.31 or less, and preferably 0.12 or more and 0.23 or less. In addition, a ratio of the surface area on the permeation side to the membrane area of the ceramic membrane filter is, for example, 0.09 or more and 0.30 or less, and preferably 0.15 or more and 0.25 or less.

The cross-flow filtration in the filtration step may be carried out using a plurality of monolithic ceramic filters. When the plurality of monolithic ceramic filters are used, the plurality of monolithic ceramic filters may be connected in parallel or in series via a flow path. The plurality of monolithic ceramic filters preferably include at least monolithic ceramic filters connected in parallel. As a result, the entire membrane layer of the ceramic membrane filter can be used more uniformly, and the rate of increase in transmembrane pressure can be suppressed more effectively. In addition, a desired permeation flow rate can be easily achieved.

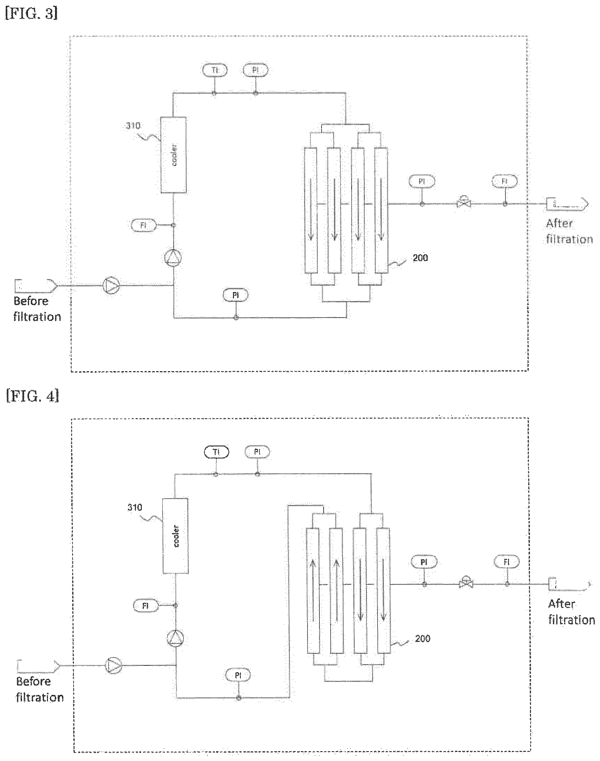

An arrangement example of a plurality of monolithic ceramic membrane filters used for cross-flow filtration of the fermented liquid will be described with reference to FIGS. 3 and 4. In FIG. 3, all the four monolithic ceramic membrane filters 200 are arranged in a parallel relationship, and four flow paths branched from one flow path are connected to each of the monolithic ceramic membrane filters 200. In FIG. 4, two units consisting of the two monolithic ceramic membrane filters 200 arranged in parallel are arranged in series. In each unit, the two monolithic ceramic membrane filters 200 are arranged in parallel, and two flow paths branched from one flow path are connected to each of the monolithic ceramic membrane filters 200. The monolithic ceramic membrane filters 200 are arranged in series as a unit, and one flow path is connected to the inflow side and the outflow side of each unit.

When a plurality of monolithic ceramic filters are used in the filtration step, cross-flow filtration may be continuously performed by sequentially switching two or more monolithic ceramic membrane filters switchably connected to the flow path of the fermented liquid. In this case, the filtration step includes allowing the fermented liquid to permeate through at least one monolithic ceramic membrane filter and performing clean-in-place cleaning of at least one other monolithic ceramic membrane filter, and switching the flow path of the fermented liquid to allow the fermented liquid to permeate through the monolithic ceramic membrane filter after the clean-in-place cleaning and performing clean-in-place cleaning of the monolithic ceramic membrane filter through which the fermented liquid has permeated. In the present embodiment, it is preferable that a time required for the permeation of the fermented liquid is longer than a time required for the clean-in-place cleaning.

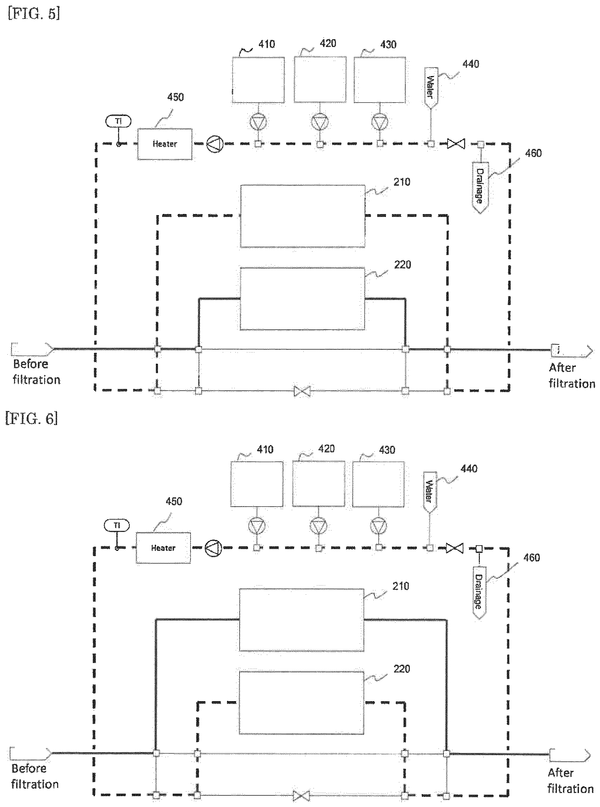

An example of the filtration step performed by sequentially switching a plurality of monolithic ceramic membrane filters will be described with reference to FIGS. 5 and 6. In FIG. 5, the fermented liquid containing silica gel flows along the flow path shown by the solid line and is cross-flow filtered by a filtration device 220 including the monolithic ceramic membrane filter. During filtration of the fermented liquid by the filtration device 220, a cleaning liquid and water flow along the flow path shown by the broken line, and a filtration device 210 including the monolithic ceramic membrane filter is subjected to clean-in-place (CIP) cleaning. Next, in FIG. 6, the fermented liquid containing silica gel is supplied to the filtration device 210 subjected to clean-in-place cleaning along the flow path shown by the solid line, and the fermented liquid is cross-flow filtered. On the other hand, in the filtration device 220 used for the cross-flow filtration of the fermented liquid, the cleaning liquid and water flow along the flow path shown by the broken line to perform clean-in-place cleaning. By sequentially switching between the state of FIG. 5 and the state of FIG. 6 by a flow path switching device, the fermented liquid can be continuously filtered. The filtration devices 210 and 220 may be configured as shown in FIG. 3 or FIG. 4, for example.

The clean-in-place cleaning is performed by, for example, supplying a first cleaning agent 410, a second cleaning agent 420, a third cleaning agent 430, and water 440 to the flow path, and allowing at least one of the cleaning agent and water to permeate through the filtration devices 210 and 220. As the first cleaning agent, the second cleaning agent, and the third cleaning agent, for example, an alkaline aqueous solution such as an aqueous solution of sodium hydroxide; an oxidizing cleaning solution such as an aqueous solution of sodium hypochlorite, hydrogen peroxide, and persulfate; an acidic aqueous solution such as nitric acid, phosphoric acid, and the like are used. The cleaning agent may be used alone or in combination of two or more. In the clean-in-place cleaning, the cleaning agent may be heated to 30°C or higher and 60°C or lower by a heating device 450. The cleaning agent, water, etc. used for clean-in-place cleaning are discharged from a drainage section 460 at any time.

In the present embodiment, it is preferable that a time during which the fermented liquid can be continuously filtered by one filtration device including the ceramic membrane filter is longer than a time required for the clean-in-place cleaning of the ceramic membrane filter. This enables continuous filtration without stopping the supply of the fermented liquid. Generally, the time required for the clean-in-place cleaning of the ceramic membrane filter is about 2 to 3 hours. Therefore, if a time during which the fermented liquid can be continuously filtered without cleaning the ceramic membrane filter is, for example, 3 hours or more, the fermented liquid can be continuously filtered. The time during which the fermented liquid can be continuously filtered is preferably 5 hours or more, which is about the same as cross-flow filtration using a filtration device including a polymer membrane filter, and the time is more preferably 6 hours or more.

In the filtration step, the temperature of the fermented liquid at the time of passage through the ceramic membrane filter is, for example, -2°C or higher and 3°C or lower, and preferably -2°C or higher and lower than 2°C. By forcibly expressing chill haze at such a temperature, a turbid substance can be more efficiently removed by cross-flow filtration. The temperature of the fermented liquid may be adjusted, for example, by a cooler 310 as shown in FIGS. 3 and 4.

In general, the faster a circulation linear speed of the fermented liquid in the filtration step, the more the increase in transmembrane pressure can be suppressed; however, considering the load on the pump and the like, the circulation linear speed is, for example, 1 m/s or more and 3 mls or less.

Examples

Hereinafter, the present invention will be specifically described based on examples. However, the present invention is not limited to these examples.

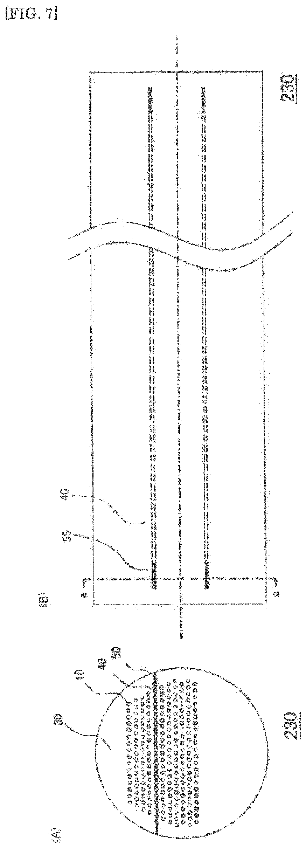

As a monolithic ceramic membrane filter, a ceramic membrane filter A having a structure provided with four liquid collecting slits as shown in a schematic view in FIG. 7 was prepared. FIG. 7A is a schematic cross-sectional view of a ceramic membrane filter 230 taken along the line a-a in FIG. 7B, and FIG. 7B is a partially see-through schematic plan view seen from a side surface. As shown in FIG. 7A, in the cross section of the ceramic membrane filter 230, the substrate material layer 30 is provided with the stock solution channel 10 (only a part thereof is shown). The plurality of liquid collection channels 40 (only a part thereof is shown) are provided in parallel with the stock solution channel 10, and the four liquid collecting slits 50 connected to the plurality of liquid collection channels 40 and penetrating between the side surfaces are provided. As shown in FIG. 7B, the ceramic membrane filter 230 is provided with the liquid collection channel 40 having no opening on a plurality of end surfaces in the stretching direction. On the side surface of the ceramic membrane filter 230, openings 55 are provided at eight locations corresponding to the four liquid collecting slits 50. An outline of the specifications of the ceramic membrane filter A is shown below.

Ceramic membrane filter A
Material (membrane layer, substrate material): Alumina ($Al_2O_3$)
Pore size: 0.7 $\mu$m, 0.5 $\mu$m or 1.0 $\mu$m
External shape: $\varphi$60 mm $\times$ length 1100 mm
Membrane area: 2.3 m$^2$
The number of slits: four slits, openings at eight locations
Surface area on permeation side: 0.51 m$^2$
Distance from membrane surface to permeation side: up to 11 mm

A ceramic membrane filter B having the same configuration as the above was prepared except that no slit was provided for comparison.

Ceramic membrane filter B

Pore size: 0.7 $\mu$m

Surface area on permeation side: 0.22 m$^2$

Distance from membrane surface to permeation side: up to 32mm

The pore size of the ceramic membrane filter was measured under the following conditions based on JIS R 1655: 2003 "Test methods for pore size distribution of fine ceramic green body by mercury porosimetry".

[Table 1]

| Material and morphology of sample | $Al_2O_3$ Product cut out from a ceramic membrane filter (including membrane layer and base material)) |
| --- | --- |
| Sample mass | about 3g |
| Sample pretreatment | Drying treatment |
| Equipment used | Commercially available mercury press-fit porosimeter |
| Mercury used | Reagent grade |
| Physical characteristics of mercury used in the calculation | Contact angle 130° Surface tension 485dynes/cm |
| Measurement mode | In the process of continuously changing the pressure, the pressure and the amount of mercury injection were measured when the pressure change or the change in the amount of mercury injection exceeded a certain value. |
| Blank correction | None |

In the frequency distribution curve for a pore size, since a plurality of peaks were obtained depending on the membrane layer and the substrate material, a peak value corresponding to the membrane layer was defined as the pore size.

Fermented liquid <beer>

A mixture of 800 kg of malt and 2000 L of water was held at 50°C for 30 minutes to decompose protein. Then, 1200 L of water was added, and the mixture was held at 64°C for 20 minutes to saccharify a malt-derived component to obtain wort. After filtering the wort, hops were added and boiled for 90 minutes. After the boiling treatment, concentration adjusting hot water was added to obtain 5000 L of fermentation raw material solution with 12° P To the obtained fermentation raw material solution, 30 kg of bottom fermentation yeast in terms of dry weight was added, and the mixture was fermented at 12°C for 7 days. Then, the mixture was aged at 10°C for 10 days, then further cooled to 0°C, and stored for 7 days to prepare a beer fermented liquid. The number of yeasts in the beer fermented liquid was $3 \times 10^6$ cells/ml.
The following silica hydrogel, silica xerogel and PVPP were provided as stabilizers.

<Silica hydrogel>

Drying loss: 66%
Volume-based 50% particle diameter (median diameter; d50): 19.0 μm
Number-based 50% particle diameter (median diameter; d50): 5.2 μm
Number-based 10% particle diameter (d10): 2.5 μm
Specific surface area (ISO 9277): 763 m$^2$/g

<Silica xerogel>

Drying loss: 4.2%
Volume-based 50% particle diameter (median diameter; d50): 12.8 μm

Number-based 50% particle diameter (median diameter; d50): 3.8 μm
Number-based 10% particle diameter (d10): 2.1 μm
Specific surface area (ISO 9277): 575 mlg

<PVPP>

Drying loss: less than 6.0%
200 mesh pass rate: 90% or more
400 mesh pass rate: 45% or more and less than 90%

Evaluation of cleaning recoverability

An amount of water permeation of the ceramic membrane filter before cross-flow filtration under each condition and the amount of water permeation after CIP cleaning under the following conditions after cross-flow filtration were measured, and a rate of change thereof was calculated to evaluate the cleaning recoverability.

<CIP cleaning>

(1) Water/normal temperature
(2) Caustic soda (sodium hydroxide) 1%/80°C/30 minutes
(3) Hot water/55°C
(4) Hot water/35°C/caustic soda (sodium hydroxide) 1% and sodium hypochlorite 500 ppm
(5) Hot water/35°C
(6) Hot water/35°C/0.1% phosphoric acid
(7) Water/normal temperature

<Method of measuring water permeation amount>

Water at room temperature was made to pass through a ceramic membrane filter for 300 seconds, and the amount of water permeation was determined by averaging the transmission line bundles every 10 seconds. The amount of water permeation fluctuated depending on the temperature at the time of measurement and the transmembrane pressure and therefore was converted to a value at 25°C under 1 bar. The following formula and a temperature correction value were used for conversion.

[MATH. 3]

$$\text{Water permeation amount } \left[\frac{\text{L/h}}{\text{m}^2}\right] = \frac{\text{Permeation side flow rate [L/h]} \times 1 \text{ [bar]}}{\text{Transmembrane pressure [bar]} \times \text{Membrane area [m}^2\text{]}} \times \text{Temperature correction value}$$

Temperature correction value

EP 3 909 670 B1

[Table 2]

| Real temperature (°C) | Correction value | Real temperature (°C) | Correction value | Real temperature (°C) | Correction value | Real temperature (°C) | Correction value |
|---|---|---|---|---|---|---|---|
| ~1.4 | 1.934 | 10.5~11.4 | 1.422 | 20.5~21.4 | 1.099 | 30.5~31.4 | 0.875 |
| 1.5~2.4 | 1.870 | 11.5~12.4 | 1.383 | 21.5~22.4 | 1.073 | 31.5~32.4 | 0.860 |
| 2.5~3.4 | 1.808 | 12.5~13.4 | 1.346 | 22.5~23.4 | 1.048 | 32.5~33.4 | 0.839 |
| 3.5~4.4 | 1.751 | 13.5~14.4 | 1.311 | 23.5~24.4 | 1.022 | 33.5~34.4 | 0.822 |
| 4.5~5.4 | 1.696 | 14.5~15.4 | 1.278 | 24.5~25.4 | 1.000 | 34.5~35.4 | 0.806 |
| 5.5~6.4 | 1.645 | 15.5~16.4 | 1.245 | 25.5~26.4 | 0.977 | 35.5~36.4 | 0.799 |
| 6.5~7.4 | 1.596 | 16.5~17.4 | 1.214 | 26.5~27.4 | 0.955 | 36.5~37.4 | 0.773 |
| 7.5~8.4 | 1.549 | 17.5~18.4 | 1.184 | 27.5~28.4 | 0.934 | 37.5~38.4 | 0.759 |
| 8.5~9.4 | 1.505 | 18.5~19.4 | 1.153 | 28.5~29.4 | 0.913 | 38.5~39.4 | 0.744 |
| 9.5~10.4 | 1.463 | 19.5~20.4 | 1.127 | 29.5~30.4 | 0.893 | 39.5~40.4 | 0.730 |

Evaluation of turbidity stability

The fermented malt beverage produced was stored at 50°C for 1 week and then stored at 0°C for 1 day, and the presence or absence of turbidity was visually confirmed.

(Examples 1 to 3, Comparative Examples 1 to 6)

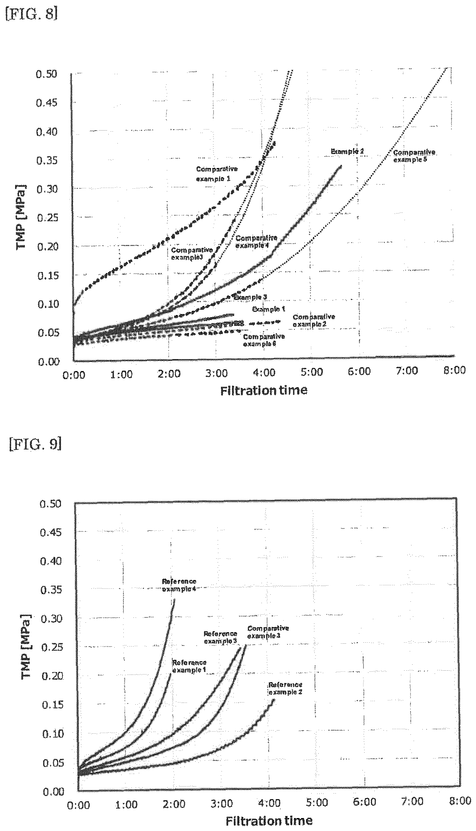

A filtration test of the fermented liquid was carried out under the test conditions shown below using a cross-flow filtration apparatus provided with four monolithic ceramic membrane filters as shown in FIG. 3 or FIG. 4. The test conditions and results are shown in Table 3 and FIG. 8. In Comparative Examples 3, 4 and 5 in FIG. 8, an approximate curve is shown as a dotted line portion following a broken line portion which is a measured value. TMP = 3.0 MPa arrival time in Comparative Examples 4 and 5 in Table 3 is a predicted value calculated from the approximate curve.

[Table 3]

| | Ceramic membrane filter | | | Stabilizer | | Filtration conditions | | | | Cross-flow filtration test results | | | Turbid stability |
|---|---|---|---|---|---|---|---|---|---|---|---|---|---|
| | Pore size [μm] | Slit | LRV | Type | Content ratio [ppm] | Permeated flux [L/m²/h] | Temperature [°C] | Circulation line speed [m/s] | Channel | TMP= 0.10MPa Time of attainment [h] | TMP= 0.30MPa Time of attainment [h] | Rate of parmiability [%] (attained TMP) | |
| Example 1 | 0.7 | Yes | ≥7 | Hydrogel | 500 | 50 | -1.5 | 1.5 | Parallel | - | - | - | No turbidity |
| Example 2 | 0.7 | Yes | ≥7 | Hydrogel | 500 | 75 | -1.5 | 1.5 | Parallel | 2.5 | 5.4 | ▼7.4% (0.33MPa) | No turbidity |
| Example 3 | 0.7 | Yes | ≥7 | Hydrogel | 1000 | 50 | -1.5 | 1.5 | Parallel | - | - | - | No turbidity |
| Comparative example 1 | 0.7 | No | - | None | - | 25 | -1.5 | 1.5 | Parallel | 0.0 | as | - | Turbidity |
| Comparative example 2 | 0.7 | Yes | ≥7 | None | - | 50 | -1.5 | 1.5 | Parallel | - | - | - | Turbidity |
| Comparative example 3 | 0.7 | Yes | ≥7 | Xerogel | 500 | 50 | -1.5 | 1.5 | Parallel | 2.0 | 3.8 | Δ4.0% (0.24MPa) ▼13.5% (0.31MPa) | No turbidity No turbidity |
| Comparative example 4 | 0.7 | Yes | ≥7 | Xerogel IPVPP | 400 1100 | 50 | -1.5 | 1.5 | Parallel | 2.2 | 3.9* | - | No turbidity |
| Comparative example 5 | 0.5 | Yes | ≥7 | Hydrogel | 500 | 50 | -1.5 | 1.5 | Parallel | 3.1 | 6.1' | - | No turbidity |
| Comparative example 6 | 1.0 | Yes | <5 | Hydrogel | 500 | 50 | -1.5 | 1.5 | Parallel | - | - | - | No turbidity |

(Reference examples 1 to 4)

A filtration test of the fermented liquid was carried out in the same manner as above except that the test conditions shown below were used. The test conditions and results are shown in Table 4 and FIG. 9 together with Comparative Example 3.

[Table 4]

| | Ceramic membrane filter | | | Stabilizer | | Fitration conditions | | | | Cross-flow filtration test results | | Turbid stability |
|---|---|---|---|---|---|---|---|---|---|---|---|---|
| | Pore size [$\mu$m] | Sit | LRV | Type | Content ratio [ppm] | Permeated flux [L/m$^2$/h] | Temperature [°C] | Circulation line speed [m/s] | Channel | TMP=0.10MPa Time of attainment [h] | Rate of permiability [%] (attained TMP) | |
| Comparative example 3 | 0.7 | Yes | ≥7 | Xerogel | 500 | 50 | -1.5 | 1.5 | Parallel | 2.0 | - | No turbidity |
| Reference example 1 | 0.7 | Yes | ≥7 | Xerogel | 750 | 50 | -1.5 | 1.5 | Parallel | 1.4 | - | No turbidity |
| Reference example 2 | 0.7 | Yes | ≥7 | Xerogel | 750 | 50 | 2.0 | 1.5 | Parallel | 3.5 | ▼1.9% (0.25MPa) | Turbidity |
| Reference example 3 | 0.7 | Yes | 27 | Xerogel | 750 | 50 | -1.5 | 2.0 | Parallel | 2.6 | - | No turbidity |
| Reference example 4 | 0.7 | Yes | ≥7 | Xerogel | 750 | 50 | -1.5 | 1.5 | Parallel +serise | 1.0 | ▼14.2% (0.33MPa) | No turbidity |

(Reference examples 5 to 8)

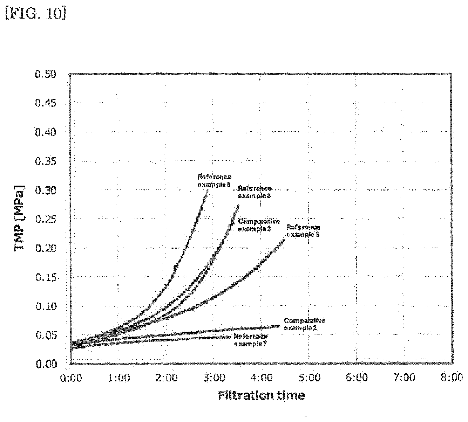

A filtration test of the fermented liquid was carried out in the same manner as above except that the test conditions shown below were used. The test conditions and results are shown in Table 5 and FIG. 10 together with Comparative Examples 2 and 3.

[Table 5]

| | Ceramic membrane filter | | | Stabilizer | | Filtration conditions | | | | | Cross-flow filtration test results |
|---|---|---|---|---|---|---|---|---|---|---|---|
| | Pore size [$\mu$m] | Slit | LRV | Type | Content ratio [ppm] | Permeated flux [L/m$^2$/h] | Temperature [°C] | Circulation line speed [m/s] | Channel | | TMP= 0.10MPa Time of attainment [h] |
| Comparative example 2 | 0.7 | Yes | ≥7 | None | - | 50 | -1.5 | 1.5 | Parallel | | - |
| Comparative example 3 | 0.7 | Yes | ≥7 | Xerogel | 500 | 50 | -1.5 | 1.5 | Parallel | | 2.0 |
| Reference example 5 | 0.5 | Yes | ≥7 | None | - | 50 | -1.5 | 1.5 | Parallel | | 2.7 |
| Reference example 6 | 0.5 | Yes | ≥7 | Xerogel | 500 | 50 | -1.5 | 1.5 | Parallel | | 1.7 |
| Reference example 7 | 1.0 | Yes | <5 | None | - | 50 | -1.5 | 1.5 | Parallel | | - |
| Reference example 8 | 1.0 | Yes | <5 | Xerogel | 500 | 50 | -1.5 | 1.5 | Parallel | | - |

From the above, cross-flow filtration is performed by using a monolithic ceramic membrane filters including a slit and having a membrane pore size of 0.6 $\mu$m or more and 0.9 $\mu$m or less, and adding silica gel having a drying loss of 40% or more as a stabilizer to the fermented liquid, so that the rapid increase in transmembrane pressure is suppressed to enable a long-term filtration operation.

**Claims**

1. A method of producing a fermented malt beverage, comprising performing cross-flow filtration of fermented liquid containing malt as a raw material,

   wherein the cross-flow filtration is performed through a monolithic ceramic membrane filter disposed apart from a flow path of the fermented liquid, including a slit having an opening in its side surface, and having a membrane pore size of 0.6 $\mu$m or more and 0.9 $\mu$m or less, and
   the fermented liquid contains silica gel having a drying loss of 40% or more, said drying loss being measured according to ISO 787-2 : 1981 (JIS K 5101-15-1 : 2004)

2. The production method according to claim 1, wherein in the cross-flow filtration, a permeation flux is 30 L/m$^2$/h or more.

3. The production method according to claim 1 or 2, wherein the cross-flow filtration is performed with a transmembrane pressure of 0.6 MPa or less.

4. The production method according to any one of claims 1 to 3, wherein the cross-flow filtration includes increasing the transmembrane pressure to 0.3 MPa or more.

5. The production method according to any one of claims 1 to 4, wherein the cross-flow filtration is performed continuously for 3 hours or more using the same monolithic ceramic membrane filter.

6. The production method according to any one of claims 1 to 5, wherein in the cross-flow filtration, a log reduction value LRV is 5 or more relative to Lactobacillus brevis.

7. The production method according to any one of claims 1 to 6, which does not comprise at least one of a disinfection treatment and a sterilization treatment of the fermented liquid other than the cross-flow filtration.

8. The production method according to any one of claims 1 to 7, which does not comprise filtration of the fermented liquid other than the cross-flow filtration.

9. The production method according to any one of claims 1 to 8, which does not comprise a heat sterilization step of the fermented liquid.

10. The production method according to any one of claims 1 to 9, wherein in the production method, the log reduction value LRV is 5 or more relative to Lactobacillus brevis.

11. The production method according to any one of claims 1 to 10, wherein the cross-flow filtration is performed through two or more monolithic ceramic membrane filters connected in parallel via a flow path.

12. The production method according to any one of claims 1 to 11, wherein the cross-flow filtration is performed at a temperature of the fermented liquid of -2°C or higher and 3°C or lower.

13. A method of filtering a fermented liquid, comprising cross-flow filtering a fermented liquid containing malt as a raw material,

    wherein the cross-flow filtration is performed through a monolithic ceramic membrane filter disposed apart from a flow path of the fermented liquid, including a slit having an opening in its side surface, and having a membrane pore size of 0.6 $\mu$m or more and 0.9 $\mu$m or less, and
    the fermented liquid contains silica gel having a drying loss of 40% or more, said drying loss being measured according to ISO 787-2 : 1981 (JIS K 5101-15-1 : 2004)

**14.** The filtration method according to claim 13, wherein the cross-flow filtration is continuously performed by sequentially switching two or more monolithic ceramic membrane filters switchably connected to the flow path of the fermented liquid, and includes allowing the fermented liquid to permeate through at least one of the monolithic ceramic membrane filters and performing clean-in-place cleaning of at least one other of the monolithic ceramic membrane filters, and

switching the flow path of the fermented liquid to allow the fermented liquid to permeate through the monolithic ceramic membrane filter after the clean-in-place cleaning and performing clean-in-place cleaning of the monolithic ceramic membrane filter through which the fermented liquid has permeated, and
a time during which the fermented liquid is permeated is longer than a time required for the clean-in-place cleaning.

**Patentansprüche**

**1.** Verfahren zur Herstellung eines fermentierten Malzgetränks, umfassend das Durchführen von Querstromfiltration einer fermentierten Flüssigkeit, welche Malz als ein Grundstoff enthält,

wobei die Querstromfiltration durch einen monolithischen Keramikmembranfilter, welcher neben einem Strömungsweg der fermentierten Flüssigkeit angeordnet ist, einen Schlitz mit einer Öffnung in seiner Seitenfläche einschließt und eine Membranporengröße von 0,6 μm oder mehr und 0,9 μm oder weniger aufweist, durchgeführt wird, und
die fermentierte Flüssigkeit Kieselgel mit einem Trocknungsverlust von 40% oder mehr enthält, wobei der Trocknungsverlust in Übereinstimmung mit ISO 787-2 : 1981 (JIS K 5101-15-1 : 2004) gemessen wird.

**2.** Herstellungsverfahren nach Anspruch 1, wobei in der Querstromfiltration ein Permeationsfluss 30 L/m$^2$/h oder mehr beträgt.

**3.** Herstellungsverfahren nach Anspruch 1 oder 2, wobei die Querstromfiltration mit einem Transmembrandruck von 0,6 MPa oder weniger durchgeführt wird.

**4.** Herstellungsverfahren nach einem der Ansprüche 1 bis 3, wobei die Querstromfiltration das Erhöhen des Transmembrandrucks auf 0,3 MPa oder mehr einschließt.

**5.** Herstellungsverfahren nach einem der Ansprüche 1 bis 4, wobei die Querstromfiltration kontinuierlich für 3 Stunden oder mehr unter Verwendung desselben monolithischen Keramikmembranfilters durchgeführt wird.

**6.** Herstellungsverfahren nach einem der Ansprüche 1 bis 5, wobei in der Querstromfiltration ein log-Reduktionswert LRV in Bezug auf Lactobacillus brevis 5 oder mehr beträgt.

**7.** Herstellungsverfahren nach einem der Ansprüche 1 bis 6, welches außer der Querstromfiltration nicht mindestens eine von einer Desinfektionsbehandlung und einer Sterilisationsbehandlung der fermentierten Flüssigkeit umfasst.

**8.** Herstellungsverfahren nach einem der Ansprüche 1 bis 7, welches außer der Querstromfiltration keine Filtration der fermentierten Flüssigkeit umfasst.

**9.** Herstellungsverfahren nach einem der Ansprüche 1 bis 8, welches keinen Schritt der Wärmesterilisation der fermentierten Flüssigkeit umfasst.

**10.** Herstellungsverfahren nach einem der Ansprüche 1 bis 9, wobei in dem Herstellungsverfahren der log-Reduktionswert LRV in Bezug auf Lactobacillus brevis 5 oder mehr beträgt.

**11.** Herstellungsverfahren nach einem der Ansprüche 1 bis 10, wobei die Querstromfiltration durch zwei oder mehr monolithische Keramikmembranfilter, welche über einen Strömungsweg parallel verbunden sind, durchgeführt wird.

**12.** Herstellungsverfahren nach einem der Ansprüche 1 bis 11, wobei die Querstromfiltration bei einer Temperatur der fermentierten Flüssigkeit von -2°C oder höher und 3°C oder niedriger durchgeführt wird.

**13.** Verfahren zur Filtration einer fermentierten Flüssigkeit, umfassend das Querstromfiltrieren einer fermentierten Flüssigkeit, welche Malz als ein Grundstoff enthält,

wobei die Querstromfiltration durch einen monolithischen Keramikmembranfilter, welcher neben einem Strömungsweg der fermentierten Flüssigkeit angeordnet ist, einen Schlitz mit einer Öffnung in seiner Seitenfläche einschließt und eine Membranporengröße von 0,6 µm oder mehr und 0,9 µm oder weniger aufweist, durchgeführt wird, und

die fermentierte Flüssigkeit Kieselgel mit einem Trocknungsverlust von 40% oder mehr enthält, wobei der Trocknungsverlust in Übereinstimmung mit ISO 787-2 : 1981 (JIS K 5101-15-1 : 2004) gemessen wird.

**14.** Filtrationsverfahren nach Anspruch 13, wobei die Querstromfiltration kontinuierlich durch sequenzielles Schalten von zwei oder mehr monolithischen Keramikmembranfiltern, welche mit dem Strömungsweg der fermentierten Flüssigkeit schaltbar verbunden sind, durchgeführt wird und einschließt:

das Eindringenlassen der fermentierten Flüssigkeit durch mindestens einen der monolithischen Keramikmembranfilter sowie das Durchführen von ortsgebundener Reinigung von mindestens einem anderen der monolithischen Keramikmembranfilter, und

das Schalten des Strömungswegs der fermentierten Flüssigkeit, um die fermentierte Flüssigkeit durch den monolithischen Keramikmembranfilter nach der ortsgebundenen Reinigung eindringen zu lassen, sowie das Durchführen von ortsgebundener Reinigung des monolithischen Keramikmembranfilters, durch welchen die fermentierte Flüssigkeit eingedrungen ist, und

ein Zeitraum, während dessen die fermentierte Flüssigkeit eindringt, länger ist als ein Zeitraum, welcher für die ortsgebundene Reinigung erforderlich ist.

**Revendications**

**1.** Procédé de production d'une boisson au malt fermenté, comprenant réaliser une filtration croisée de liquide fermenté contenant du malt comme matière première,

dans lequel la filtration croisée est réalisée à travers un filtre à membrane céramique monolithique disposé à l'écart d'un trajet d'écoulement du liquide fermenté, incluant une fente ayant une ouverture dans sa surface latérale, et ayant une taille de pore de membrane de 0,6 µm ou plus et 0,9 µm ou moins, et

le liquide fermenté contient du gel de silice ayant une perte de séchage de 40 % ou plus, ladite perte de séchage étant mesurée conformément à ISO 787-2 : 1981 (JIS K 5101-15-1 : 2004).

**2.** Procédé de production selon la revendication 1, dans lequel dans la filtration croisée, un flux de perméation est de 30 L/m$^2$/h ou plus.

**3.** Procédé de production selon la revendication 1 ou 2, dans lequel la filtration croisée est réalisée avec une pression transmembranaire de 0,6 MPa ou moins.

**4.** Procédé de production selon l'une quelconque des revendications 1 à 3, dans lequel la filtration croisée inclut augmenter la pression transmembranaire à 0,3 MPa ou plus.

**5.** Procédé de production selon l'une quelconque des revendications 1 à 4, dans lequel la filtration croisée est réalisée en continu pendant 3 heures ou plus en utilisant le même filtre à membrane céramique monolithique.

**6.** Procédé de production selon l'une quelconque des revendications 1 à 5, dans lequel dans la filtration croisée, une valeur de réduction logarithmique LRV est de 5 ou plus par rapport à Lactobacillus brevis.

**7.** Procédé de production selon l'une quelconque des revendications 1 à 6, qui ne comprend pas au moins un d'un traitement de désinfection et d'un traitement de stérilisation du liquide fermenté autre que la filtration croisée.

**8.** Procédé de production selon l'une quelconque des revendications 1 à 7, qui ne comprend pas de filtration du liquide fermenté autre que la filtration croisée.

**9.** Procédé de production selon l'une quelconque des revendications 1 à 8, qui ne comprend pas d'étape de stérilisation thermique du liquide fermenté.

10. Procédé de production selon l'une quelconque des revendications 1 à 9, dans lequel dans le procédé de production, la valeur de réduction logarithmique LRV est de 5 ou plus par rapport à Lactobacillus brevis.

11. Procédé de production selon l'une quelconque des revendications 1 à 10, dans lequel la filtration croisée est réalisée à travers deux filtres à membrane céramique monolithique ou plus connectés en parallèle par le biais d'un trajet d'écoulement.

12. Procédé de production selon l'une quelconque des revendications 1 à 11, dans lequel la filtration croisée est réalisée à une température du liquide fermenté de - 2 °C ou supérieure et 3 °C ou inférieure.

13. Procédé de filtration d'un liquide fermenté, comprenant la filtration croisée d'un liquide fermenté contenant du malt comme matière première,
dans lequel la filtration croisée est réalisée à travers un filtre à membrane céramique monolithique disposé à l'écart d'un trajet d'écoulement du liquide fermenté, incluant une fente ayant une ouverture dans sa surface latérale, et ayant une taille de pore de membrane de 0,6 $\mu$m ou plus et 0,9 $\mu$m ou moins, et le liquide fermenté contient du gel de silice ayant une perte de séchage de 40 % ou plus, ladite perte de séchage étant mesurée conformément à ISO 787-2 : 1981 (JIS K 5101-15-1 : 2004).

14. Procédé de filtration selon la revendication 13, dans lequel la filtration croisée est réalisée en continu en commutant séquentiellement deux filtres à membrane céramique monolithique ou plus connectés de manière à pouvoir être commutés au trajet d'écoulement du liquide fermenté, et inclut permettre au liquide fermenté de subir une perméation à travers au moins un des filtres à membrane céramique monolithique et réaliser un nettoyage en place d'au moins un autre des filtres à membrane céramique monolithique, et

commuter le trajet d'écoulement du liquide fermenté pour permettre au liquide fermenté de subir une perméation à travers le filtre à membrane céramique monolithique après le nettoyage en place et réaliser un nettoyage en place du filtre à membrane céramique monolithique à travers lequel le liquide fermenté a subi une perméation, et une durée au cours de laquelle le liquide fermenté a subi une perméation est plus longue qu'une durée requise pour le nettoyage en place.

[FIG. 1]

[FIG. 2]

EP 3 909 670 B1

[FIG. 3]

[FIG. 4]

24

[FIG. 5]

[FIG. 6]

[FIG. 7]

[FIG. 8]

[FIG. 9]

[FIG. 10]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0351363 A
- JP S6219873287 A
- US 4781831 A
- WO 2013147271 A